# EUROPÄISCHE PATENTSCHRIFT

(11) **EP 4 301 991 B1**
(45) Veröffentlichungstag und Bekanntmachung des Hinweises auf die Patenterteilung: **14.01.2026**
(21) Anmeldenummer: 22707135.4
(22) Anmeldetag: 22.02.2022
(51) Int. Cl.: F16B 5/02, F16B 13/14, F16B 13/06

(54) **VERFAHREN UND SYSTEM ZUM NIVELLIEREN EINES IN EINEM UNTERGRUND ZU VERANKERNDEN BEFESTIGUNGSELEMENTS**
METHOD AND SYSTEM FOR LEVELLING A FASTENING ELEMENT TO BE ANCHORED IN A SUBSTRATE
PROCÉDÉ ET SYSTÈME DE NIVELLEMENT D'UN ÉLÉMENT DE FIXATION À ANCRER DANS UN SOUS SOL

(30) Priorität: 03.03.2021 EP 21160510
(43) Veröffentlichungstag der Anmeldung: 10.01.2024
(73) Patentinhaber: Hilti Aktiengesellschaft, 9494 Schaan (LI)
(72) Erfinder: KUHN, Martin, 81249 München (DE); HEFELE, Christian, 87739 Breitenbrunn (DE); BAUMANN, Oliver, Manly NSW 2095 (AU)
(74) Vertreter: Hilti Aktiengesellschaft Corporate Intellectual Property
(86) Internationale Anmeldenummer: PCT/EP2022/054355
(87) Internationale Veröffentlichungsnummer: WO 2022/184497

(56) Entgegenhaltungen:
- DE-A1- 102018 111 049
- DE-U1- 20 118 703
- US-A1- 2006 193 714
- US-B2- 10 590 672

## Beschreibung

### Technisches Gebiet

Die Erfindung betrifft ein Verfahren zum Nivellieren (d. h. ordnungsgemäßem Ausrichten) eines in einem Untergrund zu verankernden Befestigungselements, wobei das Befestigungselement beispielsweise zur Montage einer Brüstung oder Verglasung dienen kann. Beim Befestigungselement kann es sich beispielsweise um eine Befestigungsplatte bzw. Ankerplatte handeln, die mittels eines chemischen oder mechanischen Ankers in einem Untergrund wie Beton verankert wird. Die Erfindung betrifft auch ein entsprechendes System, das zur Durchführung dieses Verfahrens ausgebildet ist.

### Technischer Hintergrund

Nivellieren von Ankerplatten ist eine typische Anwendung beim Montieren von beispielsweise Brüstungen, Schutzgeländer, Leitplanken, Verglasung, Regallagern und vielem mehr. Die eigentliche Anwendung ist recht zeitaufwendig und unhandlich für den Monteur: Der größte Nachteil besteht bei bekannten Montagetechniken darin, dass ein Befestigungselement wie eine Ankerplatte meist nur dadurch ordnungsgemäß ausgerichtet (nivelliert) werden kann, dass ein darunter am Anker angeordnetes Einstellelement, wie eine Nivellierungs-Mutter oder ein U-förmiger Abstandshalter, per Hand von der Seite oder von unten eingestellt werden muss.

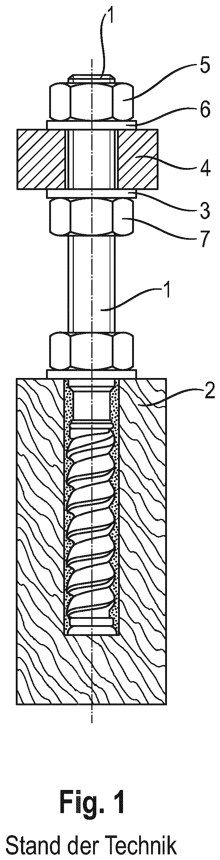

So sind bei bekannten Methoden zur Montage einer Brüstung oder Verglasung etc. typischerweise folgende Schritte erforderlich, die in Fig. 1 beispielhaft gezeigt sind:
- Zunächst werden die Anker 1 selbst installiert, d. h. am Untergrund 2 montiert. Dabei werden beispielsweise jeweils vier Anker pro Befestigungspunkt eingesetzt, von denen Fig. 1 nur einen Anker 1 zeigt.
- Danach wird an jedem Anker 1 eine zusätzliche Mutter 7 und eine Unterlegscheibe 3 vormontiert, bevor ein Befestigungselement 4, beispielsweise eine zu befestigende Platte 4 darüber, d. h. auf dieser Unterlegscheibe 3, angeordnet wird.
- Um die zu befestigende Platte 4 korrekt auszurichten (Nivellieren), müssen nun diese zusätzlichen Muttern 7 eine nach der anderen, d. h. Anker 1 für Anker 1, von der Seite und damit von unterhalb der zu befestigenden Platte 4 in der Höhe eingestellt werden. Dies ist in aller Regel äußerst schwierig und unhandlich.
- Erst nachdem dies erledigt ist, kann die zu befestigende Platte 4 am Anker 1 fixiert werden, beispielsweise durch eine fixierende Gewindemutter 5 mit deren Unterlegscheibe 6.

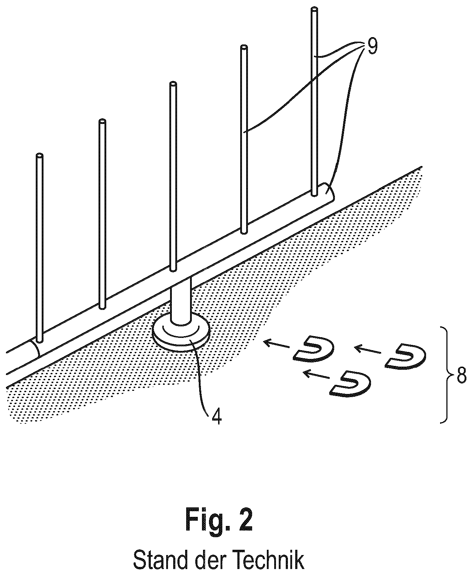

Um das Nivellieren von unterhalb des Befestigungselements 4 zumindest etwas zu vereinfachen, verwenden manche Monteure ferner U-förmige Abstandshalter 8, die am Anker unterhalb des Befestigungselements angebracht werden. U-förmige Abstandshalter 8 können von der Seite eingeschoben werden, wie in Fig. 2 am Beispiel eines Befestigungselements 4 für eine Brüstung 9 veranschaulicht.

Bei chemischen Verankerungen mittels beispielsweise Injektionsmörtel oder Kapseln kann es zudem zu zusätzlichen Problemen kommen, wenn der Mörtel an das Ankergewinde oder andere Ankerteile wie Spreizbolzen etc. gelangt, deren Funktion dadurch beeinträchtigt werden könnte.

Aus der US2006/193714 A1 ist ein Verfahren zum abstandsgenauen Befestigen eines ersten Bauteils an einem zweiten Bauteil bekannt. Weiterhin ist aus der DE102018111049 A1 eine Verbindung zwischen zumindest einem ersten Bauteil und einem zweiten Bauteil mit einer Befestigungsanordnung mit einem Toleranzausgleich zwischen dem ersten Bauteil und dem zweiten Bauteil bekannt. Schließlich ist aus der US 10 590 672 B2 eine Pfostenmontagehalterung zur Befestigung von Pfosten auf einem Untergrund wie beispielsweise einer Betonplatte bekannt.

Es ist Aufgabe der vorliegenden Erfindung, zur Lösung der geschilderten Nachteile und Probleme, die aus dem Stand der Technik bekannt sind, ein alternatives und/oder verbessertes Verfahren und System zum Nivellieren (d. h. zum ordnungsgemäßen Ausrichten) eines in einem Untergrund zu verankernden Befestigungselements bereitzustellen, wobei das Befestigungselement beispielsweise zur Montage einer Brüstung oder Verglasung dienen kann.

### Offenbarung der Erfindung

Diese Aufgabe wird durch ein Verfahren zum Nivellieren eines in einem Untergrund zu verankernden Befestigungselements, insbesondere eines in einem Untergrund zu verankernden Befestigungselements, gemäß Anspruch 1 sowie durch ein entsprechendes System gemäß Anspruch 8 gelöst. Weitere Ausgestaltungen sind in den abhängigen Ansprüchen angegeben. Alle in den Ansprüchen und der Beschreibung für das Verfahren genannten weiterführenden Merkmale und Wirkungen können auch in Bezug auf das System gelten, wie auch umgekehrt.

Gemäß einem ersten Aspekt ist ein Verfahren zum Nivellieren (d. h. ordnungsgemäßem Ausrichten) eines in einem Untergrund zu verankernden Befestigungselements, beispielsweise einer Befestigungsplatte, vorgesehen, das beispielsweise zur Montage einer Brüstung oder einer Verglasung dienen kann. Das Verfahren umfasst folgende Grundschritte, zusätzlich zu welchen bei Bedarf weitere Zwischenschritte hinzukommen können:
Zunächst wird ein geeigneter Anker in dem Untergrund installiert, d. h. montiert. Dies kann beispielsweise eine Ankerstange sein, die in einem unterem Stangenabschnitt ein Außengewinde zur Befestigung der Ankerstange im Untergrund und in einem oberen Stangenabschnitt ein Außengewinde zum Anbringen des Befestigungselements und/oder weiterer Montagehilfen wie Gewindemuttern und Unterlegscheiben an der Ankerstange aufweisen kann.

Begriffe wie "unter, unterer, von unten, oben, oberer, von oben, über, auf, Höhe, höhenverstellbar etc." beziehen sich in der vorliegenden Beschreibung auf eine Richtung entlang des Ankers bzw. entlang seiner Längsachse aus der Sicht des Monteurs. Mit anderen Worten bezieht sich hierin der Begriff "Höhe" insbesondere auf die Richtung, in der der Anker in den Untergrund eingesetzt wird. Dies kann typischerweise, muss jedoch nicht zwingend eine vertikale Richtung sein, denn auch eine Montage an einem schräg, unregelmäßig oder vertikal verlaufenden Untergrund ist mit dem Verfahren und System der vorliegenden Erfindung grundsätzlich genauso gut möglich wie an einem horizontalen Untergrund.

In einem weiteren Schritt wird ein entlang des Ankers höhenverstellbares Einstellelement am Anker angebracht. Das Einstellelement kann beispielsweise an einem Außengewinde des Ankers geschraubt werden und dadurch entlang des Ankers höhenverstellbar sein.

Es folgt das Anordnen, beispielsweise Aufsetzen, des Befestigungselements auf dem Einstellelement oder in einer anderen durch das Einstellelement festgelegten Position oder Höhe am Anker.

Das Befestigungselement kann beispielsweise in Form einer Ankerplatte ausgebildet sein, an der ein Geländer oder eine Brüstung oder Verglasung befestigt/montiert werden kann. Das Befestigungselement kann beim vorliegenden Verfahren und System insbesondere mittels mehrerer, beispielsweise identischer Anker in der hierin beschriebenen Weise am Untergrund befestigt und positioniert werden. Der Einfachheit halber wird das Verfahren und System hierin am Beispiel eines dieser Anker mit zugehörigen Montagehilfen und Montageschritten beschrieben.

Es folgt nun das Nivellieren des Befestigungselements durch das Einstellen des höhenverstellbaren Einstellelements anhand eines spezifischen Nivellierungs-Adapters, der zumindest teilweise über dem Befestigungselement angeordnet werden kann und daher von oben bedienbar ist. Insbesondere können das Einstellelement und der Nivellierungs-Adapter hierzu durch das Befestigungselement hindurch ineinandergreifen oder miteinander trennbar verbunden sein. Der Nivellierungs-Adapter kann insbesondere einen zu dem vorzugsweise höhenverstellbaren Einstellelement passenden Greifabschnitt aufweisen, wobei über den Greifabschnitt ein Drehmoment von dem Nivellierungs-Adapter auf das Einstellelement übertragbar ist. Zudem kann auf einer diesem Greifabschnitt gegenüberliegenden Seite des Nivellierungs-Adapters ein weiterer Greifabschnitt vorgesehen sein, an dem ein Werkzeug wie Schraubenschlüssel etc. zum Anlegen eines zum Verstellen erforderlichen Drehmoments angelegt werden kann, wobei der weitere Greifabschnitt hierzu beispielsweise in Schlitz- oder Sechskantform oder dergleichen ausgeführt sein kann.

Abschließend kann der Nivellierungs-Adapter entfernt werden und/oder das Befestigungselement beispielsweise mittels einer Gewindemutter gegebenenfalls mit einer weiteren Unterlegscheibe befestigt werden. Einige Beispiele für optionale weitere Zwischenschritte des Verfahrens werden weiter unten angegeben.

Eine Idee der Erfindung besteht in der Ermöglichung einer Einstellung des höhenverstellbaren Einstellelements von oben, wodurch das Nivellieren des Befestigungselements für den Monteur im Vergleich zum herkömmlichen Einstellen des Einstellelements von unterhalb des Befestigungselements wesentlich vereinfacht und/oder verbessert werden kann. Dies wird beispielsweise durch den Einsatz eines zum Einstellen des Einstellelements von oben ausgelegten Nivellierungs-Adapters ermöglicht.

Der Anker kann dabei insbesondere als eine Gewindestange und/oder als eine Ankerstange und/oder als ein Bolzenanker und/oder als ein Spreizanker und/oder als ein Spreizdübel ausgebildet sein. Der Anker kann dabei insbesondere zur Verwendung in ungerissenem und/oder gerissenem Beton als Untergrundmaterial und/oder zur Verwendung bzw. für höchste Leistung mit Injektionsmörteln und/oder für Standardanwendungen in ungerissenem Beton und/oder für gerissenen Beton als Untergrundmaterial und seismische Lasten ausgelegt sein. Es kann sich beispielsweise um eine Ankerstange, etwa aus Kohlenstoffstahl oder einem anderen geeigneten Material, handeln, die beispielsweise für höchste Leistung mit Injektionsmörteln für Untergrundmaterial wie gerissenen oder ungerissenen Beton ausgelegt ist. Es kann sich auch beispielsweise um einen Bolzenanker, etwa aus Kohlenstoffstahl oder einem anderen geeigneten Material, handeln, der beispielsweise für Standardanwendungen in ungerissenem Beton ausgelegt ist und Außengewinde nur in seinem oberen Abschnitt (Kopf) aufweist. Es kann sich auch beispielsweise um einen Hochleistungs-Spreizdübel, etwa aus Kohlenstoffstahl oder einem anderen geeigneten Material, handeln, der beispielsweise für gerissenen Beton und seismische Lasten ausgelegt ist und Außengewinde nur in seinem oberen Abschnitt (Kopf) aufweist.

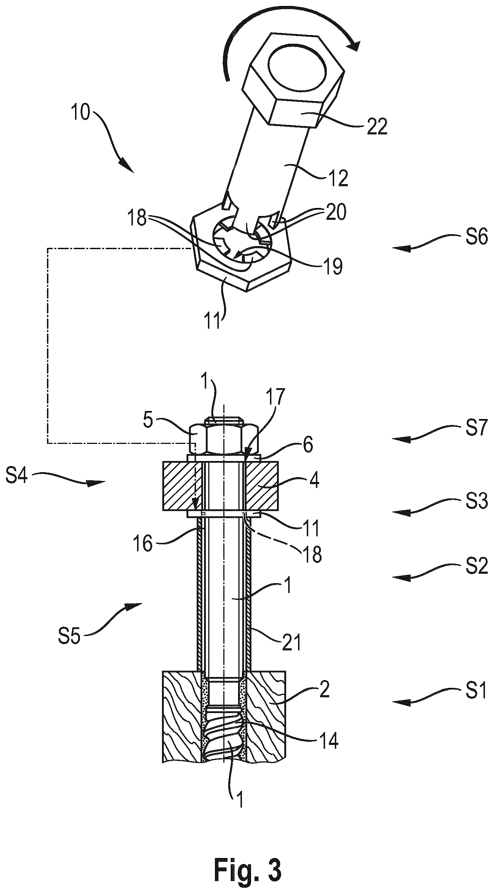

Der genannte Nivellierungs-Adapter kann beispielsweise als ein Muffen-Adapter ausgebildet sein (vgl. Fig. 3), der dazu ausgelegt ist, mit dem Einstellelement von oben durch einen Spalt zwischen dem Anker und dem Befestigungselement hindurch ineinander zu greifen oder verbunden zu sein, um das Einstellelement einzustellen. So kann das Einstellelement bequem von oben in der Höhe verstellt werden, um das darauf angeordnete bzw. aufliegende Befestigungselement (Ankerplatte etc.) zu nivellieren.

Gemäß einer Ausführungsform umfasst das Einstellelement eine Nivellierungs-Unterlegscheibe, die beispielsweise durch das Aufschrauben auf ein Außengewinde am Anker angebracht wird. Das Einstellelement kann dabei eine oder mehrere Sollbruchstellen umfassen, die beim Überschreiten eines vorbestimmten Schwellwert-Drehmoments beim Betätigen des Nivellierungs-Adapters wegbricht/wegbrechen. Eine derartige Sollbruchstelle kann beispielsweise an einem Innengewinde des Einstellelements, wie einer Nivellierungs-Unterlegscheibe oder -Gewindemutter, vorgesehen sein. Die Sollbruchstelle kann insbesondere dafür sorgen, dass eine zum Vor-Anziehen des Einstellelements angelegte Kraft an weiter unten am Anker liegende Systemkomponenten, wie z. B. seinen im Untergrund eingebetteten unteren Stangenabschnitt, weitergegeben wird.

Gemäß einer Ausführungsform weist das Einstellelement neben der Nivellierungs-Unterlegscheibe einen Rohrabschnitt auf, der mit der Nivellierungs-Unterlegscheibe fest verbunden ist, wobei der Rohrabschnitt mit einem Innengewinde ausgeführt ist, das in Eingriff mit dem Außengewinde des Ankers bringbar ist. Durch den Rohrabschnitt können die eingeleiteten Kräfte auf eine größere Länge in Erstreckungsrichtung des Ankers verteilt werden. Zudem kann der Rohrabschnitt zumindest einen großen Teil des Außengewindes des Ankers, insbesondere das gesamte Außengewinde des Ankers vor einem Kontakt mit einem Mörtel schützen. Der Rohrabschnitt weist dabei insbesondere eine im Vergleich zu der Nivellierungs-Unterlegscheibe große Erstreckung in axialer Richtung des Ankers auf, die vorzugsweise ein Vielfaches der Erstreckung der Nivellierungs-Unterlegscheibe in axialer Richtung beträgt.

Gemäß der Erfindung ist der Anker zur Verwendung oder für höchste Leistung mit Injektionsmörteln ausgelegt. Zum Schutz des Ankers vor dem Eindringen des Mörtels in sein Außengewinde oder andere Ankerteile wie Spreizbolzen etc. und/oder zum Weiterleiten eines vom Nivellierungs-Adapter am Einstellelement angelegten Drehmoments an weiter unten am Anker liegende Systemkomponenten, wie z. B. seinen im Untergrund eingebetteten unteren Stangenabschnitt, wird vor dem Anbringen des Einstellelements am Anker ein geeignetes Rohrstück oder ein zu einer geeigneten Länge abgeschnittenes Rohrmaterial auf den Anker aufgesteckt, insbesondere über dessen Ankergewinde geschoben. Das Rohrstück oder das Rohrmaterial ist hierbei insbesondere ein von dem Einstellelement unabhängiges Bauteil. Die geeignete Länge kann beispielsweise einem Abstand vom Untergrund bis zum Befestigungselement entsprechen, damit nach dem Nivellieren des Befestigungselements Mörtel außenseitig des Rohrstücks/Rohrmaterials zwischen den Untergrund und das Befestigungselement injiziert bzw. gegossen werden kann.

Insbesondere kann danach, beispielsweise nach einer vorbestimmten Mörtelverfestigungszeit des Vergussmörtels durch Aufbringen eines Drehmoments an der oben liegenden Mutter der im Untergrund befestigte Anker vorgespannt werden. Bei Anwendungen, bei denen eine Vorspannung des Ankers erzielt werden soll, kann hierzu ein über den Anker übergeschobenes Rohr bzw. eine über den Anker übergeschobene Hülse oder das mit einem Rohrabschnitt ausgeführte Einstellelement vorgesehen sein.

Gemäß einem weiteren Aspekt ist ein System zum Nivellieren eines in einem Untergrund zu verankernden, beispielsweise zur Montage einer Brüstung oder Verglasung dienenden, Befestigungselements, beispielsweise einer Befestigungsplatte bzw. Ankerplatte, vorgesehen. Dabei ist das System zur Durchführung eines Verfahrens der hierin dargelegten Art ausgebildet und kann hierzu insbesondere Folgendes umfassen:
- mindestens einen Anker, der zum Installieren in dem Untergrund ausgebildet ist;
- für jeden Anker ein Einstellelement, das zum Anbringen am Anker zum Positionieren des Befestigungselements ausgebildet ist; und
- einen Nivellierungs-Adapter,
- wobei das Einstellelement und der Nivellierungs-Adapter so ausgebildet sind, dass das Einstellelement zum Nivellieren eines darauf angeordneten und/oder in seiner Position diesbezüglich festgelegten Befestigungselements anhand des zumindest teilweise über dem Befestigungselement angeordneten und von oben betätigbaren Nivellierungs-Adapters einstellbar ist, insbesondere indem das Einstellelement und der Nivellierungs-Adapter durch das Befestigungselement hindurch ineinandergreifen oder miteinander trennbar verbunden sind, wobei für jeden Anker (1) ein Rohrstück oder ein auf eine geeignete Länge entsprechend einem gewünschten Abstand vom Untergrund (2) bis zum Befestigungselement (4) schneidbares Rohrmaterial (21) vorgesehen ist, das dazu ausgebildet ist, auf den Anker (1), insbesondere über dessen Ankergewinde (16), geschoben zu werden.

Insbesondere kann das System ferner auch ein zur Montage einer Brüstung oder Verglasung geeignetes Befestigungselement, beispielsweise eine Ankerplatte, umfassen. Dieses Befestigungselement ist zum Anordnen auf dem Einstellelement oder in einer anderen durch das Einstellelement festgelegten Position am Anker ausgebildet. Das hierin beschriebene System kann aber auch ohne das genannte Befestigungselement hergestellt und vertrieben werden, um in beschriebener Weise zum Nivellieren eines Befestigungselements verwendet zu werden, das individuell an eine gewünschte Anwendung passend am Montageort ausgesucht werden kann.

Das Befestigungselement kann beim vorliegenden Verfahren und System insbesondere mittels mehrerer oder einer Vielzahl von beispielsweise identischen Ankern in der hierin beschriebenen Weise am Untergrund befestigt und positioniert werden.

Insbesondere kann das System ferner zur Durchführung eines Verfahrens nach der weiter oben beschriebenen Ausführungsform zur Verwendung mit Ankersystemen, welche beispielsweise funktionsbedingt eine Vorspannung benötigen, ausgebildet sein. Das Rohrelement kann einstückig mit dem Einstellelement ausgeführt sein und vorzugsweise zum Zusammenwirken über ein Innengewinde mit einem Außengewinde des Ankers ausgeführt sein.

### Kurzbeschreibung der Zeichnungen

Die obigen Aspekte der Erfindung und deren Ausführungsformen und spezifische Ausgestaltungen werden nachfolgend anhand der in den beigefügten Zeichnungen dargestellten Beispiele näher erläutert. Die Zeichnungen sind schematisch gehalten. Sie können, müssen jedoch nicht als maßstabsgetreu zu verstehen sein. Gleiche Bezugszeichen stehen darin für gleiche oder einander in deren Funktion entsprechende Elemente. Es zeigen:
- Figur 1: System und einzelne Schritte einer aus dem Stand der Technik bekannten Methode zur Montage einer Brüstung oder Verglasung;
- Figur 2: ein aus dem Stand der Technik bekanntes Beispiel zum Nivellieren eines Befestigungselements für eine Brüstung mittels seitlich eingeschobener U-förmiger Abstandshalter; und
- Figur 3: ein Beispiel für ein Verfahren und System gemäß der vorliegenden Erfindung zum Nivellieren eines in einem Untergrund zu verankernden Befestigungselements, das beispielsweise zur Montage einer Brüstung oder Verglasung dienen kann.

### Beschreibung von Ausführungsformen

Alle weiter oben in der Beschreibung und in den nachfolgenden Ansprüchen erwähnten verschiedenen Ausführungsformen, Varianten und spezifischen Ausgestaltungsmerkmale des Verfahrens gemäß dem ersten Aspekt der Erfindung und des entsprechenden Systems können bei den in den Figuren gezeigten Beispielen, insbesondere alternativ oder zusätzlich, implementiert werden. Sie werden daher nachfolgend nicht alle nochmals wiederholt. Das Gleiche gilt entsprechend für die weiter oben bereits angegebenen Begriffsdefinitionen und Wirkungen in Bezug auf einzelne Merkmale des erfindungsgemäßen Verfahrens und Systems.

Während Fig. 1 und 2 den bekannten Stand der Technik erläutern und bereits eingangs beschrieben wurden, zeigt Fig. 3 (unten) in einer seitlichen Querschnittsansicht ein System 10 sowie einzelne Schritte eines Verfahrens der hierin dargelegten Art zum Nivellieren eines in einem Untergrund 2 zu verankernden Befestigungselements 4 vorgesehen, das beispielsweise zur Montage einer Brüstung oder Verglasung (nicht gezeigt) dienen kann. Oben in Fig. 3 ist zusätzlich in einer vergrößerten perspektivischen Explosionsdarstellung ein Einstellelement 11 in Form einer Nivellierungs-Unterlegscheibe sowie ein zu dessen Verstellung eingesetzter Nivellierungs-Adapter 12 dargestellt.

Das in Fig. 3 gezeigte System 10 umfasst in diesem Beispiel mindestens einen Anker 1, der zum Installieren in dem Untergrund 2, beispielsweise Beton, ausgebildet ist. Der Anker 1 ist hier rein beispielhaft eine Ankerstange, die für höchste Leistung mit Injektionsmörteln für Untergrundmaterial wie gerissenen oder ungerissenen Beton ausgelegt ist. Der Anker 1 umfasst in einem unterem Stangenabschnitt einen hier konusförmigen Abschnitt 14 zur Befestigung des Ankers 1 im Untergrund 2 und in einem oberen Stangenabschnitt ein Außengewinde 16, dessen Gewindewindungen in Fig. 3 nicht im Einzelnen erkennbar sind, zum Anbringen des Befestigungselements 4 und weiterer Montagehilfen wie Gewindemuttern und Unterlegscheiben, die nachfolgend beschrieben werden.

Für jeden Anker 1 weist das System 10 ein Einstellelement 11 beispielsweise in Form einer Nivellierungs-Unterlegscheibe auf, die in diesem Beispiel durch das Aufschrauben auf das Außengewinde 16 am Anker 1 höhenverstellbar angebracht ist. Auf dem Einstellelement ist das Befestigungselement 4, in diesem Beispiel eine Befestigungsplatte bzw. Ankerplatte, angeordnet. Das Befestigungselement 4 kann durch das Verstellen des Einstellelements 11 nivelliert, d. h. ausgerichtet werden. Das Befestigungselement 4 kann beim vorliegenden Verfahren und System insbesondere mittels mehrerer oder sogar einer Vielzahl von beispielsweise identischen Ankern 1 in der hierin beschriebenen Weise am Untergrund 2 befestigt und positioniert werden. Der Einfachheit halber wird das Verfahren und System hierin am Beispiel eines dieser Anker 1 mit zugehörigen Montagehilfen und Montageschritten beschrieben.

Zum Verstellen des Einstellelements 11 umfasst das System einen Nivellierungs-Adapter 12, in diesem Beispiel einen Muffen-Adapter, der dazu ausgelegt ist, mit dem Einstellelement 11 von oben durch einen Spalt 17 zwischen dem Anker 1 und dem Befestigungselement 4 hindurch ineinander zu greifen oder verbunden zu sein, um das Einstellelement 11 einzustellen. So kann das Einstellelement 11 bequem von oben in der Höhe verstellt werden, um das darauf aufliegende Befestigungselement 4 zu nivellieren.

Zum Zusammenwirken mit dem Nivellierungs-Adapter 12 weist das Einstellelement 11 vorliegend mehrere umfangsseitig verteilt angeordnete Vorsprünge 18 auf, die zum Zusammenwirken mit in axialer Richtung vorstehenden Vorsprüngen 20 ausgeführt sind. Über den Nivellierungs-Adapter 12 ist dabei ein Drehmoment auf das Einstellelement 11 übertragbar.

Die Vorsprünge 18 des Einstellelements 11 können gegebenenfalls als Sollbruchstelle ausgeführt sein, wobei diese derart ausgelegt sind, dass die Vorsprünge 18 bei einem Überschreiten eines vorbestimmten Schwellwert-Drehmoments beim Betätigen des Nivellierungs-Adapters 12 brechen. Die Sollbruchstelle 18 kann insbesondere dafür sorgen, dass eine zum Vor-Anziehen des Einstellelements 11 angelegte Kraft an weiter unten am Anker 1 liegende Systemkomponenten, wie z. B. seinen im Untergrund 2 eingebetteten unteren Stangenabschnitt, weitergegeben wird.

Das System 10 ist in diesem Beispiel zur Verwendung des Ankers 1 mit Injektionsmörteln ausgebildet. Hierzu umfasst das System 10 zusätzlich abschneidbares Rohrmaterial 21, das zu einer Länge beispielsweise entsprechend einem gewünschten Abstand vom Untergrund 2 bis zum Befestigungselement 4 abgeschnitten werden kann. Das Rohrmaterial 21 ist dazu ausgebildet, auf den Anker 1 über dessen Außengewinde 16 geschoben bzw. aufgesteckt zu werden, bevor das Einstellelement 11 daran angebracht wird.

Bei einer hierzu alternativen Ausführung kann es vorgesehen sein, dass das Einstellelement 11 neben der Nivellierungs-Unterlegscheibe auch das Rohrmaterial 21 bzw. einen Rohrabschnitt aufweist. Der Rohrabschnitt 21 weist hierbei vorzugsweise ein Innengewinde auf, welches in Eingriff mit dem Außengewinde 16 des Ankers 1 bringbar ist, wobei das den Rohrabschnitt 21 umfassende Einstellelement 11 von dem Nivellierungs-Adapter 12 in oben näher beschriebener Weise betätigbar ist.

Nachfolgend wird mit Bezug auf Fig. 3 ein Verfahren der hierin dargelegten Art zum Nivellieren des im Untergrund 2 zu verankernden Befestigungselements 4 unter Verwendung des Systems 10 veranschaulicht:
In einem Schritt S1 wird der Anker 1 in dem Untergrund 2 installiert. Dazu dient der im unteren Stangenabschnitt vorgesehene, hier konusförmig ausgeführte Abschnitt 14 des Ankers 1.

In einem weiteren Schritt S2 wird das Rohrmaterial 21 zu einer geeigneten Länge abgeschnitten oder abgerissen und über das Außengewinde 16 des oberen Stangenabschnitts des Ankers 1 geschoben. Anschließend wird in einem Schritt S3 das Einstellelement 11 auf das Außengewinde 16 des Ankers 1 bis zum Anschlag an und/oder bis zu einem Ineinandergreifen mit dem Rohrmaterial 21 geschraubt. Das Rohrmaterial 21 kann den Anker 1 vor Eindringen des Mörtels (beim Schritt S5) schützen.

In einem weiteren Schritt S4 wird das Einstellelement 11 auf den Anker 1 aufgeschraubt, das Befestigungselement 4 auf den Anker 1 aufgesetzt und das Befestigungselement 4 mit Hilfe des Nivellierungs-Adapters 12 durch das Einstellen des Einstellelements 11 von oben (aus der Sicht des Monteurs) nivelliert.

Bei einer bevorzugten Ausführung weist das Einstellelement 11 das Rohrmaterial 21 bzw. den Rohrabschnitt 21 auf, wobei der Rohrabschnitt 21 einstückig mit der Nivellierungs-Unterlegscheibe ausgebildet ist. Über ein Innengewinde des Einstellelements 11, das sich auch über den Rohrabschnitt 21 erstreckt, ist dieses in Eingriff mit dem Außengewinde 16 des Ankers 1 bringbar. Gegebenenfalls kann zuvor eine gewünschte Anpassung einer axialen Länge des Rohrabschnitts 21 vorgenommen werden.

Der Nivellierungs-Adapter 12 weist einen aus Sicht des Monteurs über dem Befestigungselement 4 angeordneten Greifabschnitt 22 vorliegend in Sechskantform auf, an dem ein Werkzeug wie Schraubenschlüssel etc. zum Anlegen eines zum Verstellen erforderlichen Drehmoments (wie in Fig. 3 durch einen Drehpfeil angedeutet) angelegt werden kann. Der Nivellierungs-Adapter 12 wirkt dabei über einen weiteren Greifabschnitt, der dem Greifabschnitt 22 gegenüberliegt, in oben näher beschriebener Weise mit dem Einstellelement 11 zusammen, wobei hierdurch ein Drehmoment von dem Nivellierungs-Adapter 12 auf das Einstellelement 11 übertragbar ist.

Nach dem Nivellieren wird in einem Schritt S5 Mörtel außenseitig des Rohrmaterials 21 zwischen den Untergrund 2 und das Befestigungselement 4 injiziert bzw. gegossen. Nach erforderlicher Aushärtezeit des Mörtels kann in einem Schritt S6 der Nivellierungs-Adapter 12 mit einem gewünschten Drehmoment betätigt werden. Alternativ oder zusätzlich hierzu kann es vorgesehen sein, dass der Nivellierungs-Adapter 12 zum Überschreiten eines Schwellwert-Drehmoments derart betätigt wird, dass eine Sollbruchstelle 18 des Einstellelements 11 wegbricht. Anschließend kann der Nivellierungs-Adapter 12 entfernt und das Befestigungselement 4 am Anker 1 in einem Schritt S7 mittels einer fixierenden Gewindemutter 5, gegebenenfalls mit einer weiteren Unterlegscheibe 6, fixiert werden.

In einem Schritt S7 wird das Befestigungselement 4 mittels einer fixierenden Gewindemutter 5 und gegebenenfalls einer weiteren Unterlegscheibe 6 am Untergrund fixiert, wobei bei Ankersystemen, welche eine Vorspannung benötigen, diese hierdurch in das im Untergrund befindliche Funktionsteil, insbesondere den konusförmigen Abschnitt 14, eingeleitet werden kann.

Neben hierin beispielhaft erwähnten Anwendungen der erfindungsgemäßen Nivellierungsmethode eines Befestigungselements, das zur Montage einer Brüstung oder Verglasung dienen kann, kann es auch für andersartige Anwendungen eingesetzt werden, die ebenfalls ein Nivellieren eines im Untergrund verankerten Befestigungselements erfordern.

## Patentansprüche

1. Verfahren zum Nivellieren eines in einem Untergrund zu verankernden Befestigungselements (4), das beispielsweise zur Montage einer Brüstung (9) oder Verglasung dient, mit den Schritten:
- Installieren eines Ankers (1) in dem Untergrund (2);
- Anbringen eines entlang des Ankers (1) höhenverstellbaren Einstellelements (11) am Anker (1);
- Anordnen des Befestigungselements (4) auf dem Einstellelement (11) oder in einer anderen durch das Einstellelement (11) festgelegten Position am Anker (1);
- Nivellieren des Befestigungselements (4) durch das Einstellen des Einstellelements (11) von oben anhand eines Nivellierungs-Adapters (12), der zumindest teilweise über dem Befestigungselement (4) angeordnet ist und von oben greifbar und bedienbar ist, insbesondere indem das Einstellelement (11) und der Nivellierungs-Adapter (12) durch das Befestigungselement (4) hindurch ineinandergreifen oder miteinander trennbar verbunden sind;
- Entfernen des Nivellierungs-Adapters (12) und/oder Fixieren des Befestigungselements (4) am Anker (1) in der so eingestellten Position, wobei der Anker (1) für den Einsatz mit chemischen und mechanischen Verankerungssystemen ausgelegt ist;
- vor dem Anbringen des Einstellelements (11) ein Rohrstück oder ein zu einer geeigneten Länge, entsprechend einem Abstand vom Untergrund (2) bis zum Befestigungselement (4), abgeschnittenes Rohrmaterial (21) auf den Anker (1), insbesondere über dessen Ankergewinde (16), eingebracht wird; und
- nach dem Nivellieren des Befestigungselements (4) Mörtel außenseitig des Rohrs bzw. Rohrmaterials (21) zwischen den Untergrund (2) und das Befestigungselement (4) eingebracht oder injiziert wird.

2. Verfahren nach Anspruch 1, **dadurch gekennzeichnet, dass** der Anker (1)
- als chemischer Anker mit einer Gewindestange; und/oder
- als ein Bolzenanker; und/oder
- als ein Spreizanker; und/oder
- als ein Hinterschnittanker; und/oder
- als ein Schraubanker; und/oder
- für den Einsatz in ungerissenem und/oder gerissenem Beton als Untergrundmaterial; und/oder
- für dynamisch oder seismisch anliegende Lasten ausgelegt ist.

3. Verfahren nach Anspruch 1 oder 2, **dadurch gekennzeichnet, dass** das Befestigungselement (4) als eine Ankerplatte ausgebildet ist.

4. Verfahren nach einem der vorhergehenden Ansprüche, **dadurch gekennzeichnet, dass** der Nivellierungs-Adapter (12)
- ein Muffen-Adapter ist, der dazu ausgelegt ist, mit dem Einstellelement (11) von oben durch einen Spalt (17) zwischen dem Anker (1) und dem Befestigungselement (4) hindurch ineinander zu greifen oder verbunden zu sein, um das Einstellelement (11) einzustellen, und/oder
- einen über dem Befestigungselement (4) angeordneten Greifabschnitt (22), beispielsweise in Schlitz- oder Sechskantform, aufweist, an dem ein Werkzeug zum Anlegen eines zum Verstellen erforderlichen Drehmoments angreifen kann.

5. Verfahren nach einem der vorhergehenden Ansprüche, **dadurch gekennzeichnet, dass** das Einstellelement (11) eine Nivellierungs-Unterlegscheibe umfasst, die insbesondere durch das Aufschrauben auf ein Außengewinde (16) des Ankers (1) angebracht wird.

6. Verfahren nach einem der vorhergehenden Ansprüche, **dadurch gekennzeichnet, dass** das Einstellelement (11) neben der Nivellierungs-Unterlegscheibe einen Rohrabschnitt (21) aufweist, der mit der Nivellierungs-Unterlegscheibe fest verbunden ist, wobei der Rohrabschnitt (21) mit einem Innengewinde ausgeführt ist, das in Eingriff mit dem Außengewinde (16) des Ankers (1) bringbar ist.

7. Verfahren nach einem der vorherigen Ansprüche, **dadurch gekennzeichnet, dass** nach einer vorbestimmten Mörtelverfestigungszeit mittels einer fixierenden Gewindemutter (5), gegebenenfalls mit einer weiteren Unterlegscheibe (5), eine Vorspannung in den Anker (1) übertragen wird.

8. System (10) zum Nivellieren eines in einem Untergrund (2) zu verankernden, beispielsweise zur Montage einer Brüstung (9) oder Verglasung dienenden, Befestigungselements (4), wobei das System (10) zur Durchführung eines Verfahrens nach einem der vorhergehenden Ansprüche ausgebildet ist und hierzu Folgendes umfasst:
- mindestens einen Anker (1), der zum Installieren in dem Untergrund (2) ausgebildet ist;
- für jeden Anker (1) ein Einstellelement (11), das zum Anbringen am Anker (1) zum Positionieren des Befestigungselements (4), insbesondere einer Ankerplatte, ausgebildet ist; und
- einen Nivellierungs-Adapter (12),
- wobei das Einstellelement (11) und der Nivellierungs-Adapter (12) so ausgebildet sind, dass das Einstellelement (11) zum Nivellieren eines darauf angeordneten und/oder in seiner Position diesbezüglich festgelegten Befestigungselements (4) anhand des zumindest teilweise über dem Befestigungselement (4) angeordneten und von oben betätigbaren Nivellierungs-Adapters (12) einstellbar ist, insbesondere indem das Einstellelement (11) und der Nivellierungs-Adapter (12) durch das Befestigungselement (4) hindurch ineinandergreifen oder miteinander trennbar verbunden sind, wobei für jeden Anker (1) ein Rohrstück oder ein auf eine geeignete Länge entsprechend einem gewünschten Abstand vom Untergrund (2) bis zum Befestigungselement (4) schneidbares Rohrmaterial (21) vorgesehen ist, das dazu ausgebildet ist, auf den Anker (1), insbesondere über dessen Ankergewinde (16), geschoben zu werden.

9. System (10) nach Anspruch 8, ferner umfassend ein Befestigungselement (4), insbesondere eine Ankerplatte, das zum Anordnen auf dem Einstellelement (11) oder in einer anderen durch das Einstellelement (11) festgelegten Position am jeweiligen Anker (1) ausgebildet ist.

## Claims

1. Method for leveling a fastening element (4) to be anchored in a substrate, which fastening element is used, for example, for mounting a parapet (9) or glazing, comprising the steps of:
- installing an anchor (1) in the substrate (2);
- attaching an adjustment element (11) that is height-adjustable along the anchor (1) to the anchor (1);
- arranging the fastening element (4) on the adjustment element (11) or on the anchor (1) in another position defined by the adjustment element (11);
- leveling the fastening element (4) by adjusting the adjustment element (11) from above using a leveling adapter (12) which is arranged, at least in part, above the fastening element (4) and can be gripped and operated from above, in particular by the adjustment element (11) and the leveling adapter (12) interlocking or being releasably interconnected via the fastening element (4);
- removing the leveling adapter (12) and/or fixing the fastening element (4) to the anchor (1) in the position adjusted in this way, wherein the anchor (1) is designed for use with chemical and mechanical anchoring systems;
- before the adjustment element (11) is attached, a pipe part or pipe material (21), which is cut to a suitable length corresponding to a distance from the substrate (2) to the fastening element (4), is introduced onto the anchor (1), in particular via the anchor thread (16) thereof; and
- after the fastening element (4) has been leveled, mortar is introduced or injected onto the outside of the pipe or pipe material (21) between the substrate (2) and the fastening element (4).

2. Method according to claim 1, **characterized in that** the anchor (1) is designed
- as a chemical anchor having a threaded rod; and/or
- as a bolt anchor; and/or
- as an expansion anchor; and/or
- as an undercut anchor; and/or
- as a screw anchor; and/or
- for use in uncracked and/or cracked concrete as a substrate material; and/or
- for dynamic or seismic loads.

3. Method according to claim 1 or claim 2, **characterized in that** the fastening element (4) is designed as an anchor plate.

4. Method according to any of the preceding claims, **characterized in that** the leveling adapter (12)
- is a sleeve adapter which is designed to interlock with or be connected to the adjustment element (11) from above through a gap (17) between the anchor (1) and the fastening element (4) in order to adjust the adjustment element (11), and/or
- has a gripping portion (22), for example in the shape of a slit or a hexagon, which is arranged above the fastening element (4) and with which a tool for applying a torque required for adjustment can engage.

5. Method according to any of the preceding claims, **characterized in that** the adjustment element (11) comprises a leveling washer which is attached in particular by screwing it onto an external thread (16) of the anchor (1).

6. Method according to any of the preceding claims, **characterized in that** the adjustment element (11) has, in addition to the leveling washer, a pipe portion (21) which is rigidly connected to the leveling washer, the pipe portion (21) having an internal thread which can be brought into engagement with the external thread (16) of the anchor (1).

7. Method according to any of the preceding claims, **characterized in that** after a predetermined mortar hardening time, a prestress is transferred to the anchor (1) by means of a fixing threaded nut (5), optionally having a further washer (5).

8. System (10) for leveling a fastening element (4) to be anchored in a substrate (2), for example for mounting a parapet (9) or glazing, wherein the system (10) is designed to carry out a method according to any of the preceding claims and, for this purpose, comprises the following:
- at least one anchor (1) which is designed to be installed in the substrate (2);
- for each anchor (1), an adjustment element (11) which is designed to be attached to the anchor (1) for positioning the fastening element (4), in particular an anchor plate; and
- a leveling adapter (12),
- wherein the adjustment element (11) and the leveling adapter (12) are designed such that the adjustment element (11) can be adjusted in order to level a fastening element (4) arranged thereon and/or fixed in its position with respect thereto by means of the leveling adapter (12) which is arranged, at least in part, above the fastening element (4) and can be actuated from above, in particular by the adjustment element (11) and the leveling adapter (12) interlocking or being releasably interconnected via the fastening element (4), wherein a pipe part or a pipe material (21), which can be cut to a suitable length corresponding to a desired distance from the substrate (2) to the fastening element (4), is provided for each anchor (1) and is designed to be pushed onto the anchor (1), in particular via the anchor thread (16) thereof.

9. System (10) according to claim 8, further comprising a fastening element (4), in particular an anchor plate, which is designed to be arranged on the adjustment element (11) or on the relevant anchor (1) in another position defined by the adjustment element (11).

## Revendications

1. Procédé permettant la mise à niveau d'un élément de fixation (4) à ancrer dans un support, lequel élément de fixation sert par exemple au montage d'une balustrade (9) ou d'un vitrage, comportant les étapes consistant à :
- installer un ancrage (1) dans le support (2) ;
- mettre en place, sur l'ancrage (1), un élément de réglage (11) réglable en hauteur le long de l'ancrage (1) ;
- agencer l'élément de fixation (4) sur l'élément de réglage (11) ou dans une autre position sur l'ancrage (1), laquelle position est définie par l'élément de réglage (11) ;
- mettre à niveau l'élément de fixation (4) à travers le réglage de l'élément de réglage (11) par le haut à l'aide d'un adaptateur de mise à niveau (12) qui est disposé au moins partiellement au-dessus de l'élément de fixation (4) et qui peut être saisi et manipulé par le haut, en particulier du fait que l'élément de réglage (11) et l'adaptateur de mise à niveau (12) s'emboîtent à travers l'élément de fixation (4) ou sont reliés entre eux de manière séparable ;
- retirer l'adaptateur de mise à niveau (12) et/ou fixer l'élément de fixation (4) à l'ancrage (1) dans la position ainsi réglée, dans lequel l'ancrage (1) est conçu pour être utilisé avec des systèmes d'ancrage chimiques et mécaniques ;
- avant la mise en place de l'élément de réglage (11), un morceau de tuyau ou un matériau de tuyau (21) coupé à une longueur appropriée, correspondant à une distance allant du support (2) jusqu'à l'élément de fixation (4), est incorporé à l'ancrage (1), en particulier par l'intermédiaire de son filetage d'ancrage (16) ; et
- après la mise à niveau de l'élément de fixation (4), du mortier est incorporé ou injecté du côté extérieur du tuyau ou du matériau de tuyau (21) entre le support (2) et l'élément de fixation (4).

2. Procédé selon la revendication 1, **caractérisé en ce que** l'ancrage (1) est conçu
- comme un ancrage chimique comportant une tige filetée ; et/ou
- comme un boulon d'ancrage ; et/ou
- comme un élément d'ancrage à expansion ; et/ou
- comme un ancrage à contre-dépouille ; et/ou
- comme une vis d'ancrage ; et/ou
- comme matériau support pour une utilisation dans du béton non fissuré et/ou fissuré ; et/ou
- pour des charges appliquées de manière dynamique ou sismique.

3. Procédé selon la revendication 1 ou 2, **caractérisé en ce que** l'élément de fixation (4) est réalisé comme une plaque d'ancrage.

4. Procédé selon l'une des revendications précédentes, **caractérisé en ce que** l'adaptateur de mise à niveau (12)
- est un adaptateur à manchon conçu pour s'emboîter ou être relié à l'élément de réglage (11) par le haut à travers un espace (17) entre l'ancrage (1) et l'élément de fixation (4) pour régler l'élément de réglage (11), et/ou
- présente une section de préhension (22) disposée au-dessus de l'élément de fixation (4), par exemple sous forme de fente ou d'hexagone, section de préhension sur laquelle un outil peut s'agripper pour appliquer un couple de rotation nécessaire au réglage.

5. Procédé selon l'une des revendications précédentes, **caractérisé en ce que** l'élément de réglage (11) comprend une rondelle de mise à niveau, laquelle est mise en place en particulier par vissage sur un filetage extérieur (16) de l'ancrage (1).

6. Procédé selon l'une des revendications précédentes, **caractérisé en ce que** l'élément de réglage (11) présente, outre la rondelle de mise à niveau, une section de tuyau (21) solidaire de la rondelle de mise à niveau, dans lequel la section de tuyau (21) est réalisée avec un filetage intérieur apte à venir en prise avec le filetage extérieur (16) de l'ancrage (1).

7. Procédé selon l'une des revendications précédentes, **caractérisé en ce qu'**après un temps prédéterminé de durcissement de mortier, une précontrainte est transmise dans l'ancrage (1) par le biais d'un écrou fileté (5) de fixation comportant éventuellement une rondelle supplémentaire (5).

8. Système (10) permettant la mise à niveau d'un élément de fixation (4) à ancrer dans un support (2), servant par exemple au montage d'une balustrade (9) ou d'un vitrage, dans lequel le système (10) est réalisé pour la mise en oeuvre d'un procédé selon l'une des revendications précédentes et comprend à cet effet les éléments suivants :
- au moins un ancrage (1) qui est réalisé pour être installé dans le support (2) ;
- pour chaque ancrage (1), un élément de réglage (11) qui est réalisé pour être fixé à l'ancrage (1) pour la mise en place de l'élément de fixation (4), en particulier une plaque d'ancrage ; et
- un adaptateur de mise à niveau (12),
- dans lequel l'élément de réglage (11) et l'adaptateur de mise à niveau (12) sont réalisés de telle sorte que l'élément de réglage (11) peut être réglé pour la mise à niveau d'un élément de fixation (4) disposé sur celui-ci et/ou fixé dans sa position par rapport à celui-ci à l'aide de l'adaptateur de mise à niveau (12) disposé au moins partiellement au-dessus de l'élément de fixation (4) et pouvant être actionné par le haut, en particulier du fait que l'élément de réglage (11) et l'adaptateur de mise à niveau (12) s'emboîtent à travers l'élément de fixation (4) ou sont reliés l'un à l'autre de manière séparable, dans lequel un morceau de tuyau ou un matériau de tuyau (21) pouvant être coupé à une longueur appropriée correspondant à une distance souhaitée allant du support (2) jusqu'à l'élément de fixation (4) est prévu pour chaque ancrage (1), lequel morceau de tuyau ou matériau de tuyau est réalisé pour être poussé sur l'ancrage (1), en particulier par l'intermédiaire de son filetage d'ancrage (16).

9. Système (10) selon la revendication 8, comprenant en outre un élément de fixation (4), en particulier une plaque d'ancrage, qui est réalisé pour être agencé sur l'élément de réglage (11) ou dans une autre position sur l'ancrage (1) respectif, laquelle position est définie par l'élément de réglage (11).
